# EUROPEAN PATENT APPLICATION

(11) **EP 1 374 707 A1**
(43) Date of publication of application: **02.01.2004**
(21) Application number: 02254468.8
(22) Date of filing: 26.06.2002
(51) Int. Cl.: A42B 3/04

(54) **Improvements to motorcycle helmet with braking and direction indicators**

(71) Applicant: Chin, Hing Wang, Bandar Sri Damansara, 52200 Kuala Lumpur (MY)
(72) Inventor: Chin, Hing Wang, Bandar Sri Damansara, 52200 Kuala Lumpur (MY)
(74) Representative: Gambell, Derek

(57) **Abstract**

According to the invention, a helmet (6) with braking and direction indicators is to be used by a motorcycle rider. The invention is actuated by electro-magnetic waves. The memorising feature is essentially achieved by incorporating a first microprocessor at a transmitter means (20) and a second microprocessor at a receiver means (10). The braking and direction signals are first encoded in the first microprocessor, to turn on a coded transmission. The encoded transmission is then received and decoded by the second microprocessor to actuate appropriate LED driver means and indication LED (13) on the helmet (6). A receiver, an amplification means, a second microprocessor, a storage device and three indication LEDs (13) are incorporated in the receiver means (10) mounted on the helmet. Three data selection switches, a first microprocessor, a transmission section and a voltage regulator are incorporated in the transmitter means (20) mounted onto the motorcycle.

The invention is actuated by infra-red or radio frequency.

## Description

### TECHNICAL FIELD

The present invention relates generally to a motorcycle helmet with braking and direction indicators, and particularly to one, equipped with an electronic memorising feature, which is actuated by electro-magnetic waves.

### BACKGROUND OF THE INVENTION

There has been a trend in recent years for additional stop/brake warning lamps to be placed at a higher level of a motor vehicle, so that they are placed at what could be considered as the eye level height for drivers of other motor vehicles. This practice has manifested itself as the placement of additional warning lamps inside the rear windscreen of motor vehicles, and such additional warning lamps being provided as an accessory. In some instances, the entire tail/brake indicator light assemblies have been located at the rear windscreen height in the motor vehicles concerned. The same trend appears in the case of motorcycles. There had been several works to include braking and direction indicating signals to a motorcycle helmet. Generally, these can be achieved by a wired method, or a wireless actuation method.

In an earlier Malaysian Utility Innovation Application Number UI 98003303, the inventor discloses a motorcycle helmet equipped with indicators including a brake light, a right signal light and a left signal light. The indicators are in the form of a plurality of light-emitting diodes (LEDs) or 12 V light bulbs. The power supply to operate such indictors is directly connected to the existing power circuitry of the motorcycle, with the assistance of a length of power cord from a 5-pin connection socket connectable to a parallel circuitry of the indicators. The indicators are displayed on the helmet, visible to other bystanders.

One direct problem associated to this arrangement is that the loose and flexible cord over-hanging from a helmet may interfere with the free movement of the riders. Another problem is that a storage place is required for the cord, when the motorcycle is parked and not in use. To use the innovation, an electrical installation is required and a tap off point is to be provided.

One way to overcome the need to re-wire requirement according to the above-mentioned innovation is to employ a wireless means. The wireless means can be actuated by electro-magnetic waves.

An infra-red version of the wireless means is known. In United States Patent Number 4,559,516, a helmet with turn signal indicator for motorcycle riders and the like applications includes a pair of lamps respectively disposed on left-hand and right-hand sides of the helmet body, head tilt switches responsive to momentarily tilting the wearer's head in a given direction for selectively energising the lamp on corresponding helmet side. The lamps are driven by flasher holding circuits which may be selectively extinguished by rearward tilting of the wearer's head. Fibre optics extended within the helmet from adjacent the lamps to above the wearer's eyes to indicate operation to the wearer. Since the wearer is riding a motorcycle which negotiates the terrain of the ground, the wearer requires practice to use the invention effectively. Furthermore, any unexpected tilting or movement of the head may accidentally invoke the turning or braking signal.

For yet another example, United States Patent Number 5,704,707 discloses a helmet-mounted wireless frequency-modulated infra-red beam-actuated auxiliary brake light system for motorcycles. The system comprises essentially a frequency-modulated infra-red transmitter, and a helmet module which further comprises a receiving lens, a light pipe, a solar filter, a frequency-modulated infra-red receiver and decoder, and a brake lamp. The main disadvantage of this invention is that only the brake lamps are actuated, and other direction indicating signals are not included. Another disadvantage is that the infra-red transmitter is mounted in front on the handle bar of the motorcycle. Where a single driver is concerned, the invention presents no problem. Where a pillion rider is sitting at the back of the driver, the signal lights on the driver's helmet will be partially blocked by the pillion rider. Even though the pillion rider wears a similar helmet equipped with the receiver and signal lights, the linear path of the infra-red light from the front will be partially blocked by the driver. Since this prior art does not consider the security aspect of the transmitter after it is installed on the front handle, it can be easily stolen or damaged.

A radio-frequency version of the wireless means is known. For an example, United States Patent Number 4,760,373 teaches a helmet having a backward facing warning light. This shines when the motorcycle's brake pedal is depressed. Radio frequency waves are employed for transmitting and receiving the brake signal. The main disadvantage of this invention is that the radio frequency wave may clash with other wave in practical environment, resulting in false signals being received, or data being corrupted. Another disadvantage is that only brake lamp is actuated, but direction indicator light is not included.

For another example, United States Patent Number 5,040,099 discloses a helmet for a motorcycle or the like, having a rearward facing auxiliary brake lamp secured thereto spaced from and connected by an optic or sonic link to the brake light operating system of the motorcycle. The auxiliary lamp is caused to illuminate with the illumination of the brake lamp of the motorcycle. The main disadvantage of this invention is that only the brake lamps are actuated, and other direction indicating signals are not included.

According to another Malaysian Patent Application Number PI 95002810, a prior art helmet is equipped with a left signal light, a right signal light and a brake signal light. A radio wave transmitter and receiver circuitry is connected in parallel to the existing circuitry of a motorcycle. The existing circuitry passes an input signal to a transmitter means which correspondingly actuates a light emitting means disposed on the helmet by radio frequencies. The transmitter means is adapted for transmitting three different frequencies, one frequency corresponds to each of the three signal lights. Such a helmet is comparatively more expensive than the above-mentioned wired helmet. However, since it is wireless, the problems associated with a loose cord over-hanging from a helmet are avoided. However, one major practical problem arises from the invention is that the three different frequencies are being emitted, depending on which actuation switch is being engaged. At a traffic junction or other places of converging traffic, there may be other users equipped with said invention. The frequency activated by one user may de-activate the other user or vice versa. In other words, there are cross talk and interference of the radio frequencies. This situation would render the invention useless practically.

Hence, there is a continuing need to look for a solution.

### SUMMARY OF THE INVENTION

A primary object of the invention is to provide an improved motorcycle safety helmet system with braking and direction indicators.

One significant object of the invention is that the actuating means for such a system should be wireless, direct, reliable and effective.

Another significant object of the invention is that such a system should be easily installed and operated.

More specifically, another primary object of the present invention is to provide an improved helmet equipped with an electronic memorising feature, such that the transmitter frequency can be memorised, or digitally stored into a data storage device through a learning process.

One significant object of the invention is that only one frequency is employed in the invention.

Another significant object of the invention is that each motorcycle equipped with a particular transmitter frequency is matched to a helmet equipped with a receiver means. The particular frequency is encoded with a randomly generated control and address code which serves as a security and identification code. When two or more motorcycles are riding together, the randomly encoded radio waves from each user would not interfere with each other.

Another object of the invention is that a helmet equipped with a receiver means can be used to match any motorcycle equipped with a transmitter means, after the electronic memorising feature is re-activated.

The above objects are realised by providing a transmitter means, emitting braking or direction signals, mounted onto a motorcycle, and a receiver means with corresponding indicators mounted onto a helmet. The receiver means and the transmitter means are actuated by electro-magnetic waves, whereas the braking or direction indicating signals are first codified by a first microprocessor in the transmitter means, and decoded by a second microprocessor in the receiver means. With the transmitter transmission protocol, and adopting a variable delay algorithm, the present invention has eliminated the possibility of data crash or cross talk at the receiver means. The first microprocessor is incorporated in the transmitter means. An electronic memorising feature is thus incorporated in the receiver means with the use of the second microprocessor.

### BRIEF DESCRIPTION OF THE DRAWINGS

The present invention can be actuated by using infra-red or radio frequency.

The infra-red version of the present invention will be understood and appreciated more fully from the following detailed description taken in conjunction with the drawings in which: -
Figure 1a shows a block diagram of a transmitter means of the invention.
Figure 1b shows a partial view of the transmitter means mounted onto a motorcycle.
Figure 1c shows the view of a top piece and a bottom piece making up the transmission module shown in Figure 1b.
Figure 1d shows the assembled view of the transmission module with its cover lid removed.
Figure 2a shows a block diagram of a receiver means of the invention.
Figure 2b shows a perspective view of the receiver means being affixed onto the back of a helmet.
Figure 2c shows the perspective view of the receiver means illustrating various components.
Figure 3 shows a perspective view of a motorcyclist using the invention.
Figure 4a shows a data format generated by a first microprocessor.
Figure 4b illustrates the detail of an encoded signal indicating a start bit in the data format as shown in Figure 4a.
Figure 4c illustrates the detail of an encoded signal indicating a logic one state.
Figure 4d illustrates the detail of an encoded signal indicating a logic zero state.
Figure 4e illustrates the detail of an encoded signal indicating a stop bit in the data format as shown in Figure 4a.

The radio frequency version of the present invention will be understood and appreciated more fully from the following detailed description taken in conjunction with the drawings in which:
Figure 5a shows the block diagram of a transmitter means of the invention.
Figure 5b shows one example of a circuit diagram making up the transmitter means as shown in Figure Sa.
Figure 6a shows the block diagram of a receiver means of the invention.
Figure 6b shows one example of a circuit diagram making up the receiver means as shown in Figure 6a.
Figure 7 illustrates how two transmitters with different delay times avoid data crash or cross talk.

### DETAILED DESCRIPTION OF THE INVENTION

Common components in the infra-red and radio frequency versions are shown by similar numerals.

The infra-red version of the invention will now be described.

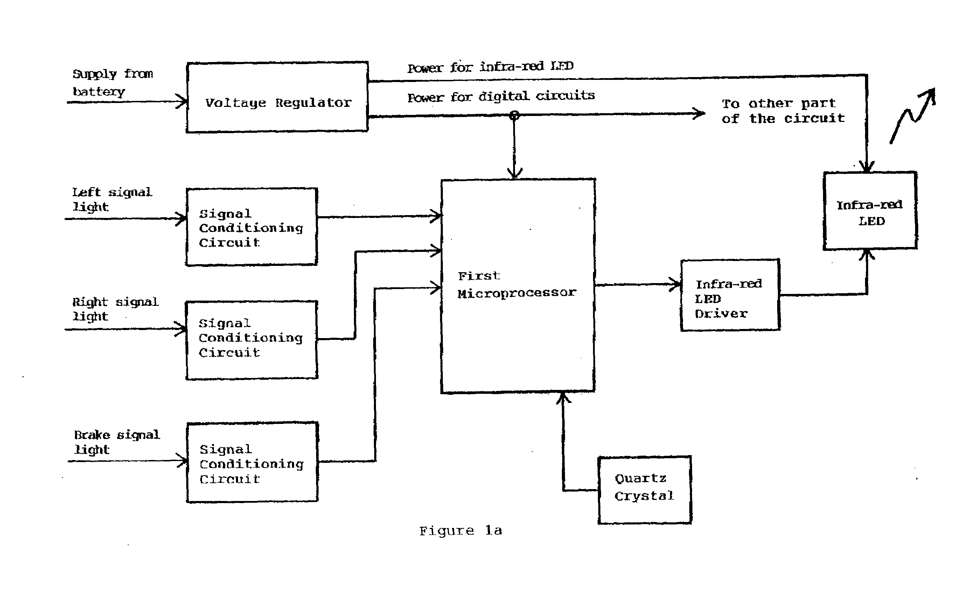

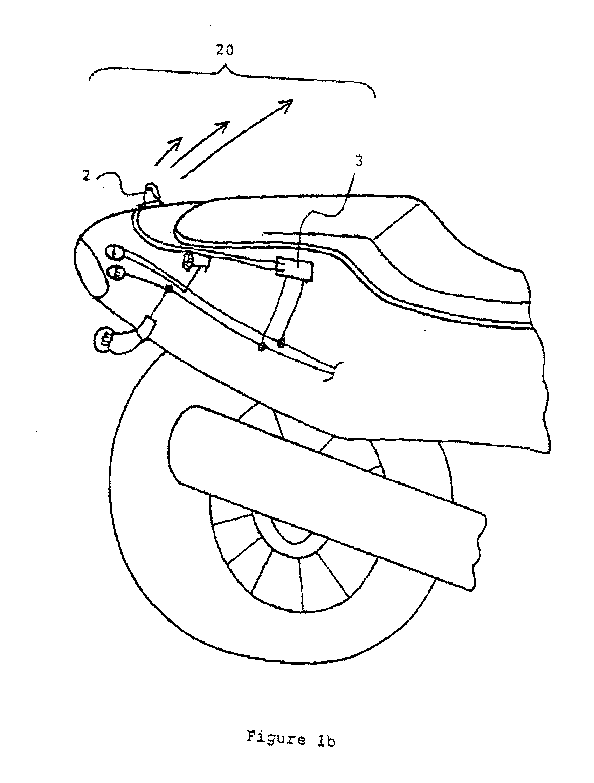

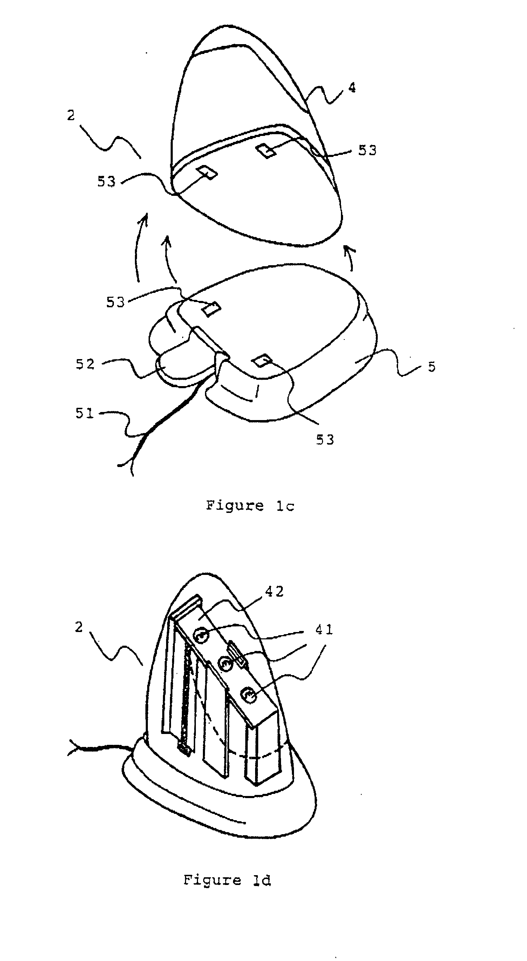

According to Figures 1a, 1b, 1c and 1d, a transmitter means of the invention is described in details here below. The transmitter means comprises a voltage regulator means, signal conditioning circuits, a first microprocessor, a quartz crystal, a first infra-red LED driver means and at least one transmission infra-red LED. The transmitter means is powered by tapping from the motorcycle's battery which is stabilised by the voltage regulator means.

Referring to Figure 1a, a brake signal is generated, either by depressing the foot pedal or pulling the hand pedal. A right-turning or left-turning signal is generated by engaging appropriate indicator switch on the front bar of the motorcycle. These are considered as the data selection switches. Each signal is separately intercepted by a signal conditioning circuit, before passing onto a first microprocessor. Signal conditioning circuit essentially steps down the voltage of incoming signal from 12 V to 5 V DC. Each signal from the signal conditioning circuit is connectable to appropriate pin of the microprocessor. For example, the braking signal is connected to pin 1, left indicator signal to pin 2, right indicator signal to pin 3. The quartz crystal is connected to the first microprocessor for timing purposes.

As shown in Figure 1b, the transmitter means (20) comprises a transmission module (2) and a controller module (3). The transmission module (2) is shown mounted onto the back of a motorcycle whereas the controller module (3) is appropriately concealed under the seat. The controller module (3) is electrically connected to the existing motorcycle circuit.

The transmission module (2) comprises a top piece (4) and a bottom piece (5) as seen in Figure 1c. The bottom piece (5) carries the electrical wiring (51), a standard clip-on mechanism (52) and two electrical connector terminals (53). Two corresponding electrical connector terminals (53) are provided at the base of the top piece (4). The top piece (4) is detachably mounted onto the bottom piece (5), while the connector terminals (53) on the top piece (4) and the bottom piece (5) provide the electrical contacts. The standard clip-on mechanism (52) engages and disengages the top piece (4).

Referring to Figure 1d, the transmission module (2) includes essentially three transmission infra-red LEDs (41) mounted onto an inclined plate (42). The inclined plate (42) and the transmission LEDs (41) are designed in such a way that the emitted infra-red light shines directly towards the receiver means (10) on the helmet (6). A transparent cover lid is employed to cover the transmission LEDs (41) and the inclined plate (42).

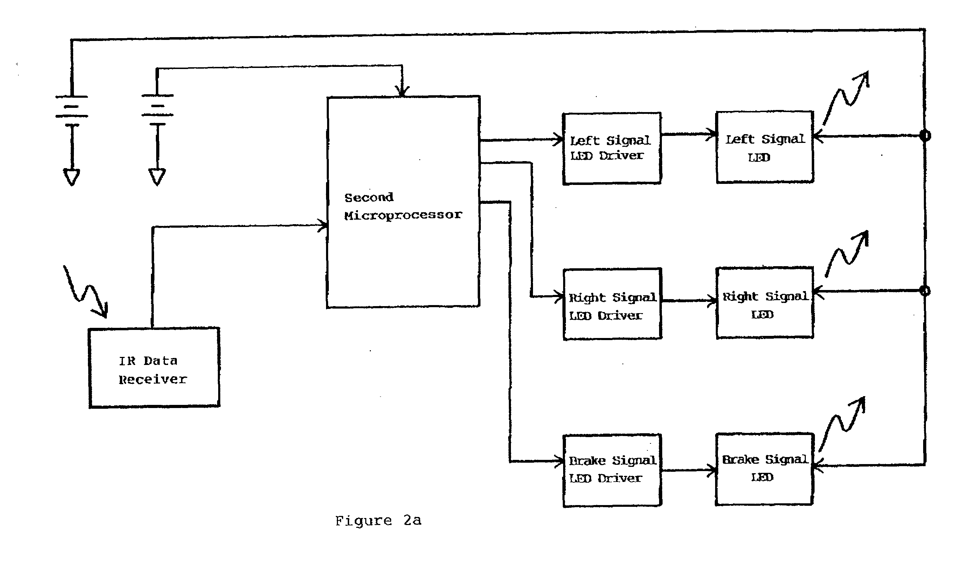

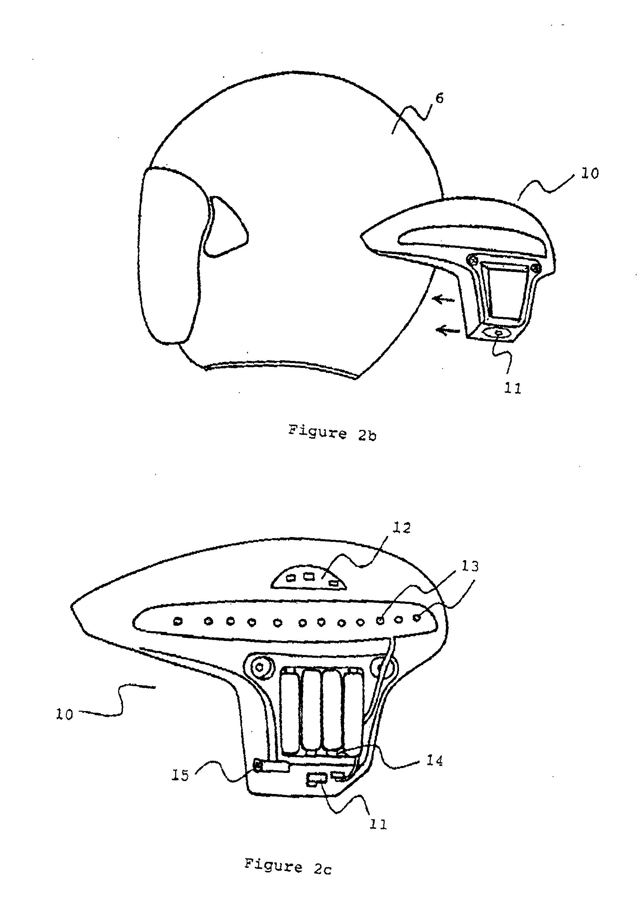

According to Figures 2a, 2b and 2c, a receiver means (10) of the invention is next described in details here below. The receiver means (10) comprises an infra-red data receiver (11), a second microprocessor, a plurality of signal LED driver means and indication LED (13). The receiver means (10) is powered by four AAA alkaline batteries, either rechargeable or normal type.

Referring to Figure 2a, the encoded transmission LED signals are received by the infra-red data receiver (11) and then connected to a second microprocessor. The second microprocessor decodes the signal. If the signal received matches a pre-set code in the infra-red data receiver (11), the microprocessor will pass on the signal to the appropriate signal LED driver means via appropriate pin connection. The signal LED driver means is a power transistor which amplifies the decoded signal from 10 to 20 mA to at least 500 mA. The appropriate braking or direction LED is then activated.

Referring to Figures 2b and 2c, the receiver means (10) is substantially T-shaped and comprises a cross-wise portion and a vertical portion. The cross-wise portion embodies a plurality of indication LED (13) for braking and direction indication. Above the indication LED (13) is disposed a receiver controller board (12) comprising the second microprocessor and signal LED driver means. The vertical portion is essentially a battery holder compartment (14) with a standard jack input mechanism (15). The standard jack input mechanism (15) allows the batteries to be recharged without being removed from the battery holder compartment (14). The data receiver (11) is disposed at the bottom side of the vertical portion. To enhance the proper reception of the infra-red light, the eye of the data receiver (11) is mounted facing downwards and underneath the signal LED driver means. The entire receiver means (10) is externally secured, using double-sided adhesive tape, to the back of a helmet (6) of a user, either a driver or a pillion rider.

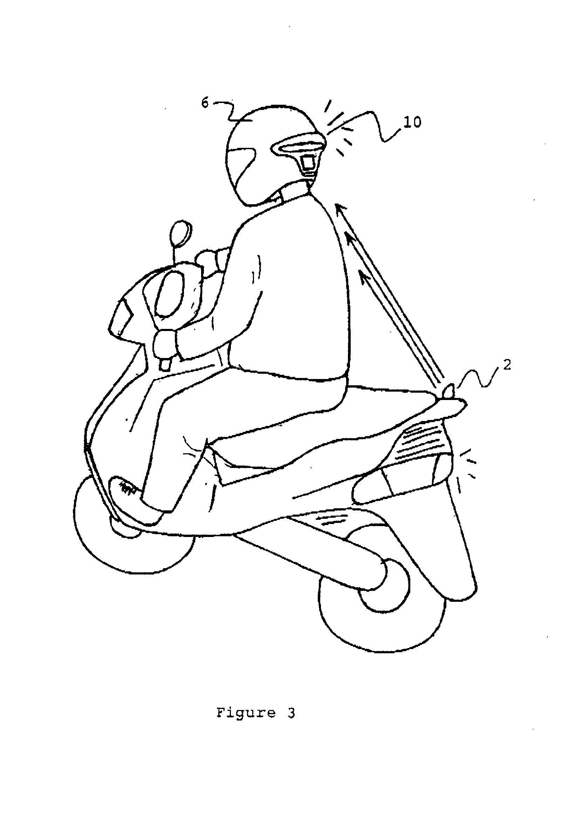

Figure 3 shows a view of a motorcyclist using the invention.

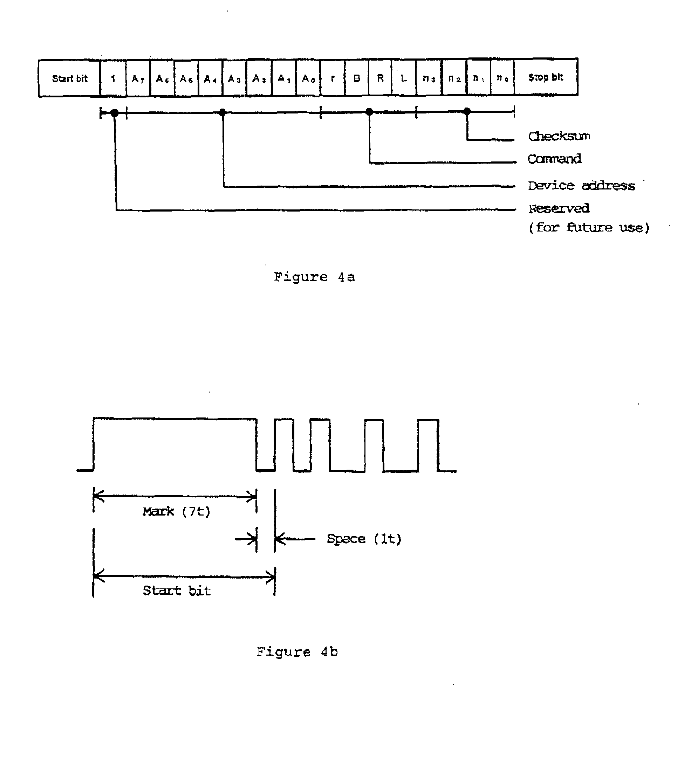

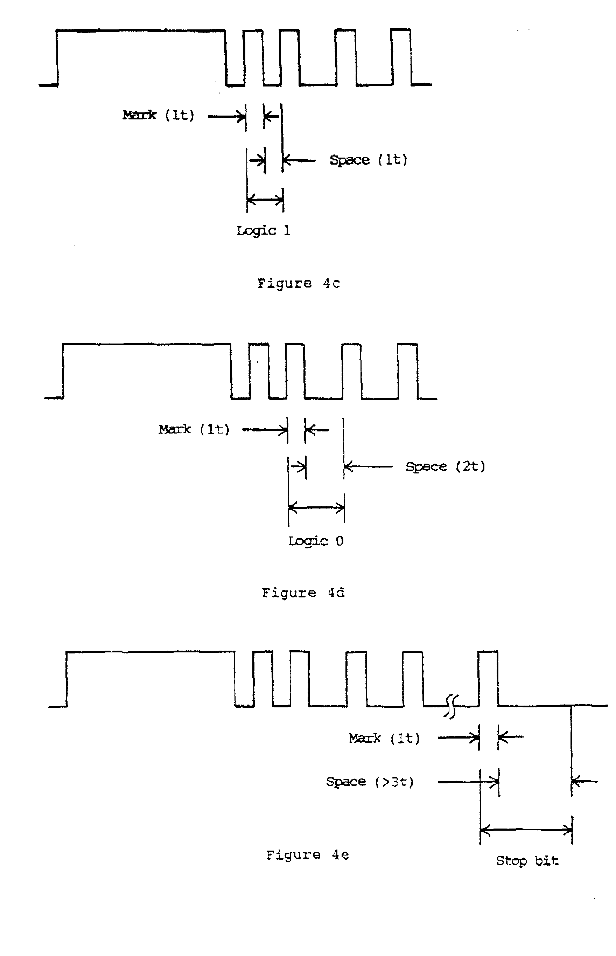

By referring to Figures 4a, 4b, 4c, 4d and 4e, the encoding or decoding process is now explained as follows. The encoded signal is determined by the settings of binary code set in the memory of the first microprocessor. The encoding is pre-set in the programme of the microprocessor at the factory. The encoded signal is either pulse coded or amplitude coded. The brake and direction signals are thus differentiated, and a clash of signals is prevented.

As shown in Figure 4a, the data format comprises 19 bits in total length, as follows: -

| | |
|---|---|
| Start | 1 bit |
| Reserved | 1 bit |
| Device address | 8 bit |
| Command | 4 bit |
| Checksum | 4 bit |
| Stop | 1 bit |

The 8 bits device address provides the unique identification of each helmet. The main objective is to avoid coding clashes. This is indicated as A₀, A₁ to A₇.

The 4 bits command provides the instruction code for the receiver to act accordingly. The last bit is reserved and the remaining three bits dictate the braking signal, the right turn signal or the left turn signal, respectively. To activate the command, a one (1) is set on the appropriate command bit. For example, the left turn signal is represented and coded as 0001. The value of one (1) indicates the on state, and the value of zero (0) indicates the off state.

The purpose of the 4 bits checksum is to verify the integrity of the data. It is derived through adding the reserved bit, the device address bits and the command bits. The sum is further added with a value of one (1). This algorithm is applied both at the transmitter and the receiver for coding and decoding.

The first microprocessor encodes the signal and passes on to a LED driver means, and subsequently turning on the LED. The output signal from the first microprocessor operates at 10 to 20 mA at 5 V. The infra-red LED driver is essentially a power transistor which amplifies the amperage to more than 500 mA.

The encoded signal uses two states for the communication. Where the infra-red beam is turned on at a speed of 38 kHz, the first microprocessor switches its output pin to logic one (1) and back to logic zero (0) at a rate of thirty eight thousand times a second. The signal is said to be modulated or at the MARK state. Where the signal is not modulated, it is said to be at the SPACE state, and no light is emitted.

The design of the encoding process is further controlled by a unit of time "t" shown in Figures 4b to 4e. The "t" unit of time can be set at 650 microseconds, or 400 microseconds or any other time unit.

START BIT as shown in Figure 4b is represented by MARK for 7t microseconds and SPACE for 1t microsecond. For an example, when the START BIT is switched on, the infra-red light beam is on for 7t microseconds, and off for 1t microsecond. The LOGIC STATE ONE (1) as shown in Figure 4c is represented by MARK for 1t microsecond, and SPACE for 1t microsecond. The LOGIC STATE ZERO (0) as shown in Figure 4d is represented by MARK for 1t microsecond, and SPACE for 2t microseconds. STOP BIT as shown in Figure 4e is represented by MARK for 1t microsecond and SPACE for more than 3t microseconds.

At the receiver means (10), the infra-red data receiver (11) detects the coded light transmission. The second microprocessor decodes the transmission by measuring the time of the MARK and the SPACE, and deciphers the instruction in the data.

This invention allows the pre-set code to be changed. After the power is switched ON, the receiver means (10) is ready to receive signals. The transmission LEDs (41) will blink within 8 seconds. Either one of the data selection switches is pressed in turn to enable a new address code to be learnt. The transmission LEDs (41) will automatically switch off if the learning process is not successful or no code was transmitted. Once the code is electronically memorised, the transmission LEDs (41) will be switched off. In actual use, the second microprocessor would verify the signals first. Accordingly, corresponding array of the indication LEDs (13) are turned on whenever any data switch is engaged.

The radio-frequency version of the invention will now be described.

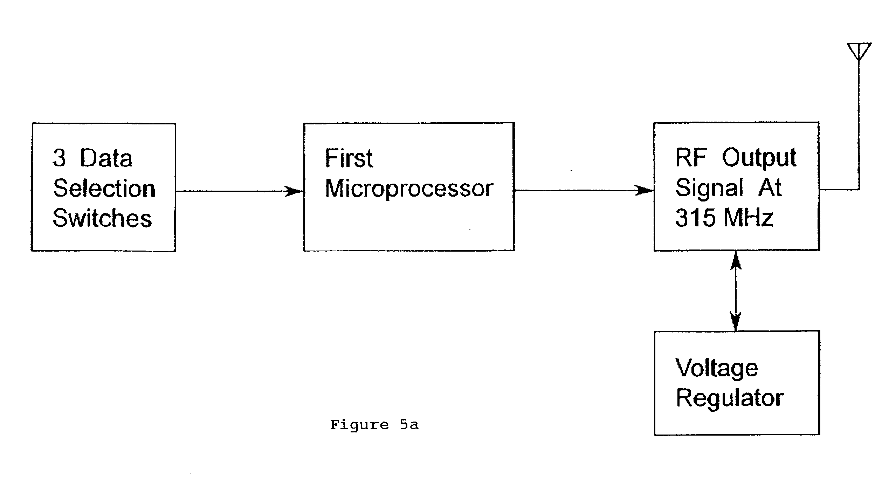

In Figure 5a, a transmitter means (20) of the invention comprises three data selection switches, a first microprocessor, a radio frequency (RF) transmission section and an antenna. The RF transmission further comprises a LC oscillator, a voltage regulator and a crystal oscillator. The three data selection switches are connected electrically to the left-turning indicator switch, and the right-turning indicator switch located on the motorcycle handle, and the foot brake pedal.

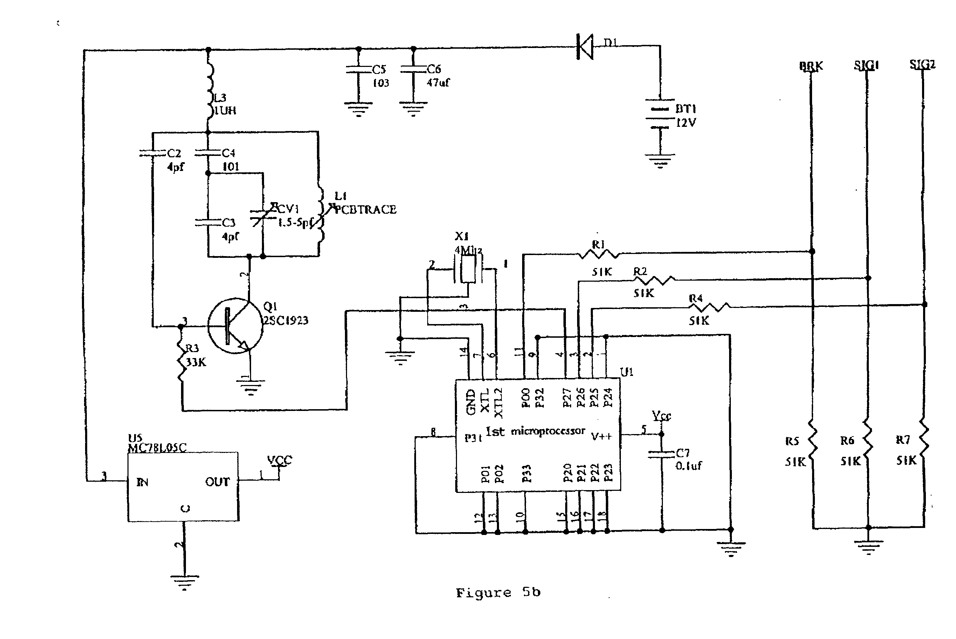

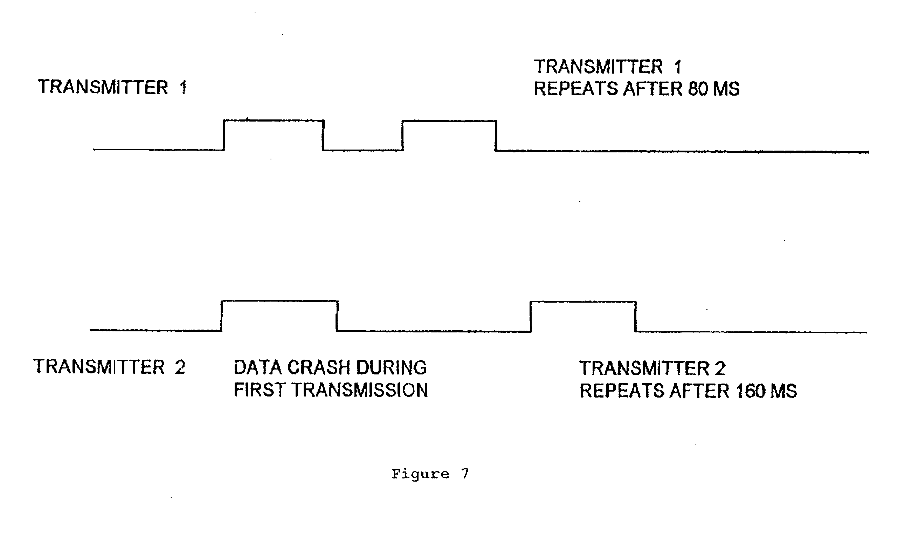

In Figure 5b, a first embodiment of the transmitter means (20) is illustrated. Three data selection switches (SIG1, SIG2, BRK) are employed to issue either the left-turning signal, or the right-turning signal, or the braking signal. The LC oscillator consists of L1, L3, C2, C3, C4, CV1 and Q1. When either one of the three data selection switches is engaged, an appropriate signal is fed into a first microprocessor through P00. In this embodiment, a Z8 micro-controller (Z86E02) is used as the first microprocessor. Upon receiving the signal, the first microprocessor would generate a transmission code through P27 to a LC oscillator. The LC oscillator then conveys the code in radio frequency at 315 MHz through the excitation of electron. The code transmitted consists of a data frame of 24 bits, comprising one start bit, sixteen security and identification bits, four command bits, four checksum bits, and one stop bit, within 40 microseconds. It is important to note that the same security and identification bits are used for all three data switches. The command bits are employed to differentiate the three data switches. The first microprocessor would generate and transmit these 24 bits in one data frame. After the first data frame is transmitted, the first microprocessor would repeat the transmission after a time delay. This time delay method is known as a variable delay algorithm. The delay time is of a variable length, being used by different transmitter means. Figure 7 illustrates the working of this variable delay algorithm for two transmitter means.

In another example below, five transmitter means are involved.
Transmitter 1 (with identification code 1) delay one data frame length (80 microseconds say);
Transmitter 2 (with identification code 2) delay two data frame length (160 microseconds say);
Transmitter 3 (with identification code 3) delay three data frame length (240 microseconds say);
Transmitter 4 (with identification code 4) delay four data frame length (320 microseconds say);
Transmitter 5 (with identification code 5) delay one data frame length (80 microseconds say).
It is important to note that transmitter 1 and transmitter 5 are differentiated by the different identification code.

The first microprocessor carries a built-in random clock to generate the code for preventing cross talk.

P20, P21, P22, P23, P24, P25, P26, P31, P32, P33, P01 and P02 are connected to signal ground. V++ is connected to 5 V direct current from a voltage regulator (U5). XTL and XTL2 of the first microprocessor are connected to a 4 MHz crystal oscillator (X1). GND of the first microprocessor is connected to the system ground.

Alternatively, another embodiment of the transmitter means (20) includes an encoder IC such as HT6P20. An encoder is a combinational logic circuit that essentially performs a "reverse" decoder function. An encoder accepts an active level on one of its inputs representing a digit, and converts it to a coded output.

In this embodiment, the encoder encodes 24 bits of information and serially transmits this information via the DOUT pin upon the reception of transmission enable signals. The combinations of address and data bits of the HT6P20 is designed by a one-time programmable process. The programmable address/data information is transmitted together with anti-code bits via a radio frequency medium upon receipt of a trigger signal. According to the invention, the transmitter frequency is also set at 315 MHz.

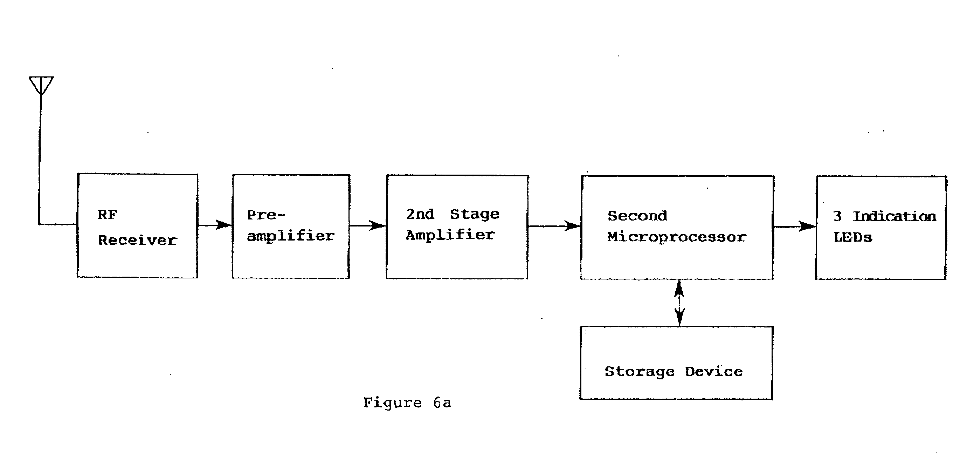

In Figure 6a, the receiver means (10) of the invention comprises a RF receiver, a pre-amplifier, a second stage amplifier, a second microprocessor, a storage device and three arrays of indication LEDs (13). The RF receiver is actually a band pass filter.

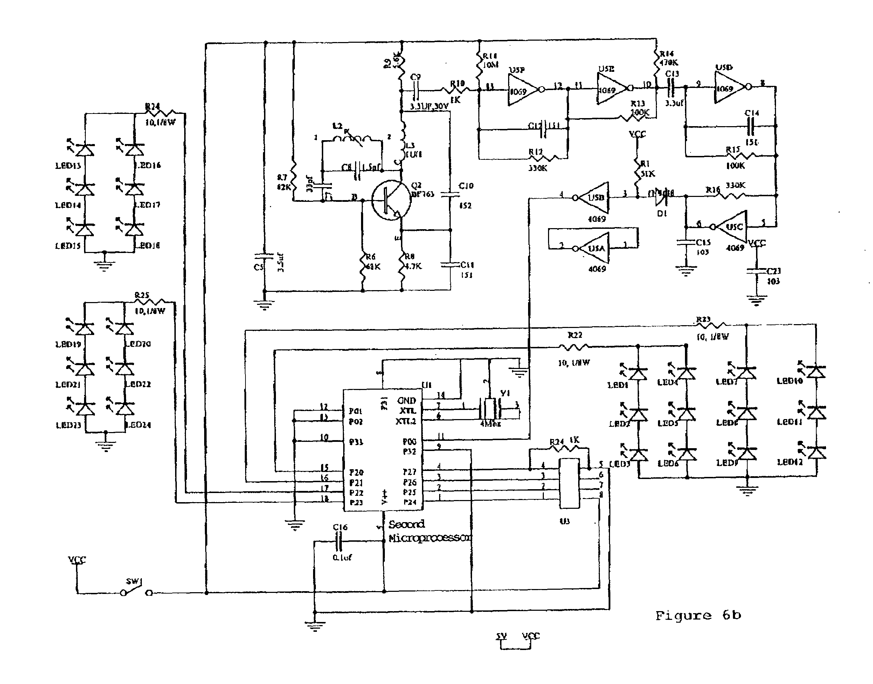

In Figure 6b, a first embodiment of the receiver means (10) is illustrated. The LC oscillator is a band pass filter, which would filter off all frequencies except those in the band within 315 MHz. The LC oscillator consists of L2, C8, C7, L3, C10, C11 R8, R6, C5, R7 and Q2. The pre-amplifier (USE, U5F) and the second stage amplifier (U5B, U5C, U5D) would then amplify the received signal and feed into a second microprocessor. The signal output from 4069 at U5B is fed into P00 of the second microprocessor where the second microprocessor would perform the task of decoding the signal. Once the signal has been completely decoded, the second microprocessor would perform the next task of verification, where the data frame received will be verified and authenticated with a previously stored code in a data storage device (U3). The LED display consists of LED1, LED2, LED3, LED4, LED5, LED6, LED7, LED8, LED9, LED10, LED11 and LED12. P01, P02, P33, GND, P32 of the second microprocessor are connected to the receiver ground. XTL and XTL2 are connected to a 4 MHz crystal oscillator. P20 and P21 of the second microprocessor are connected to brake indication LED (13). P22 and P23 of the second microprocessor are reserved for left and right indication LEDs (13). P00 of the second microprocessor is connected to the output of amplifier section (U5B). P24, P25, P26, P27 of the second microprocessor are connected to a data storage device (U3). The second microprocessor used is a Z8 micro-controller (Z86E04).

Upon data verification, the correct data would then be stored into the read-only memory of the second microprocessor as a permanent memory. Once this signal is learnt or stored, the second microprocessor sends a signal to switch on the appropriate indication LED (13). The corresponding indication LED (13) is then switched on to indicate successful learning.

Alternatively, another embodiment of the receiver means (10) comprises an antenna, a pre-amplifier, a second stage amplifier, a programmable interrupt circuit (PIC) such as 12C509, a decoder IC in the form of electrically erasable programmable read-only memory (EEPROM) integrated circuit such as 24C01A, and three indication LEDs (13) as output signals. The receiver section will demodulate any coded RF signal into their proper data. The data is then fed into the PIC. The data is then decoded by a decoder integrated circuit such as 24C01A decoder IC circuit. Once this is done, the PIC circuit will learn about the decoded data by programming it into memory. Once this signal is learnt, the PIC circuit will send out a signal to turn on the indication LEDs (13). The indication LEDs (13) will be turned off to indicate successful learning.

In the foregoing, the present invention has been described with specific details in reference to preferred embodiments. The invention is not limited to these embodiments alone, which are merely illustrative of the invention. Other changes and modifications may be made by those persons skilled in the art within the scope of the present invention as recited in the appended claims.

In learning mode, whenever any data selection switch is activated, the first microprocessor will randomly generate and transmit a coded RF output signal. When any coded RF output signal is received by the receiver means (10) on the helmet, the coded signal is fed to the second microprocessor which decodes and stores the security and identification code information in the data storage device (U3).

The invention has to be placed in a learning mode before use. According to Figures 5b and 6b, after the power switch is ON, the receiver means (10) is receiving signals. The LEDs will be in learning mode. The LED would blink such as 16 times within 8 seconds. Each of the data selection switches is pressed once in turn. Each data switch transmits its own command bits but with the same security and identification bits to the receiver means (10). The security and identification bits are employed to differentiate individual transmitter means (20), which is pre-set during production. During this period, the receiver means (10) is not assigned with any control/address code. The data storage device (U3) is empty. The LED would remain blinking such as for 16 times. The LED would switch off if the learning process is not successful or no code was transmitted. Once the signals are electronically memorised, the LEDs will be switched off.

In actual use condition, the second microprocessor would verify the signals first. Accordingly, corresponding array of indication LEDs (13) are turned on whenever any data switch is engaged. As an additional feature, if the indication LEDs (13) are turned on for more than 5 seconds, the second microprocessor can be programmed to turn off the indication LED (13), in order to conserve energy. Once the data switch is released, the indication LED (13) is switched off.

## Claims

1. A helmet (6), for use by motorcycle riders and the like, having braking and direction indicating signals emitted from a transmitter means (20), including a transmission module (2) and a controller module (3), mounted onto a motorcycle, and a receiver means (10) with corresponding indication LEDs (13) mounted onto the helmet (6), is **characterised in** which
the receiver means (10) and the transmitter means (20) are both actuated by electro-magnetic waves, whereas
the braking or direction indicating signals are first codified by a first microprocessor in the transmitter means (20), and decoded by a second microprocessor in the receiver means (10).

2. A helmet (6) with braking and direction indicators as in Claim 1 in which the direction indicating signals include a left turning or right turning signal, and/or in which at least three data selection switches are employed to activate the transmitter means (20) of the invention, and/or in which at least one signal conditioning circuit is employed to step down the voltage of braking or direction signals in the transmitter means (20), and/or in which at least one power driver means is employed to amplify the amperage of braking or direction signals from 10 to 20 mA to more than 500 mA in the receiver means (10) .

3. A helmet (6) with braking and direction indicators as in Claim 1 in which the receiver means (10) is powered by a plurality of normal or rechargeable batteries and optionally a standard jack input mechanism (15) is provided on the receiver means (10) and employed to recharge the batteries without having to remove them from a battery holder compartment (14).

4. A helmet (6) with braking and direction indicators as in Claim 1 in which the transmission module (2) includes at least a transmission LED (41) coded using a data format of at least 19 bits, and the data format includes at least a device address and a command.

5. A helmet (6) with braking and direction indicators as in Claim 1 in which the first and the second microprocessors used are Z8 micro-controllers.

6. A helmet (6) with braking and direction indicators as in Claim 1 in which the transmission and receiving of electro-magnetic waves is carried over one infra-red frequency, preferably at 38 kHz, and/or the infra-red transmission module (2) is detachably mounted onto the back of a motorcycle.

7. A helmet (6) with braking and direction indicators as in Claim 1 in which
a radio frequency (RF) receiver, an amplification means, a second microprocessor, a storage device, and three light-emitting diode (LED) displays are incorporated in the receiver means (10) mounted on the helmet (6); and
three data selection switches, a first microprocessor, a RF transmission section, an antenna and a voltage regulator are incorporated in the transmitter means (20) mounted onto the motorcycle.

8. A helmet (6), for use by motorcycle riders and the like applications, having braking and direction indicators which are regulated by a transmitter means (20) mounted onto a motorcycle, and a receiver means (10) mounted on the helmet, is **characterised in** which
a RF receiver, an amplification means, a programmable interrupt circuit (PIC), an electrically erasable programmable read-only memory (EEPROM) circuit as the decoder circuit, and indication LEDs (13) are incorporated in the receiver means (10) mounted on the helmet; and
three data selection switches, a one-time programmable encoder circuit, a RF transmission section and a voltage regulator are incorporated in the transmitter means (20) mounted onto the motorcycle.

9. A helmet (6) with braking and direction indicators as in Claim 7 or 8 in which the transmission and receiving of electro-magnetic waves is carried over one radio frequency, and/or in which the transmission and receiving frequency is set at 315 MHZ.

10. A helmet (6) with braking and direction indicators as in Claim 1 or 7 or 8 in which an electronic memorising feature is realised when the helmet equipped with the receiver means (10) is programmed to receive a randomly coded signal transmitted by the transmitter means (20).
